# EUROPÄISCHE PATENTANMELDUNG

(11) **EP 4 691 800 A1**
(43) Veröffentlichungstag der Anmeldung: **11.02.2026**
(21) Anmeldenummer: 25186493.0
(22) Anmeldetag: 01.07.2025
(51) Int. Cl.: B60C 11/03, B60C 11/11, B60C 11/12, B60C 11/13, B60C 11/01

(54) **FAHRZEUGREIFEN**

(30) Priorität: 06.08.2024 DE 102024207446
(71) Anmelder: Continental Reifen Deutschland GmbH, 30175 Hannover (DE)
(72) Erfinder: Javagal Suresh, Swaroop Sharma, 30175 Hannover (DE); Herbst, Stephan, 30175 Hannover (DE); Behr, Ulrich, 30175 Hannover (DE)
(74) Vertreter: Continental Corporation

(57) **Zusammenfassung**

Die Erfindung betrifft einen Fahrzeugreifen mit einem Laufstreifen mit zumindest einer schulterseitigen Profilblockreihe (1) mit Profilblöcken (4, 5) mit jeweils einem außerhalb der Bodenaufstandsfläche befindlichen, schulterseitigen Blockabschnitt (4₂, 5₂) mit einer Schulterflanke (6, 9),
wobei zu den Profilblöcken (4, 5) solche gehören, deren schulterseitiger Blockabschnitt (5₂) mit einer von der Schulterflanke (9) ausgehenden Vertiefung (11) versehen ist und
a. wobei die Vertiefung (11) komplett von der Schulterflanke (9) umlaufen ist oder b. wobei die Vertiefung (11) derart U-förmig von der Schulterflanke (9) umlaufen ist, dass die U-Schenkel der Schulterflanke (9) zum innenseitigen Blockabschnitt (4₁, 5₁) weisen.

Zu den Profilblöcken (4, 5) gehören Profilblöcke (4), deren schulterseitiger Blockabschnitt (4₂) mit einer nutförmigen Einbuchtung (7) versehen ist, wobei die nutförmige Einbuchtung (7) an die Schulterflanke (6) angrenzt und durch einen zu den Begrenzungskanten (7a, 7b) reichenden, im quer zur Umfangsrichtung ausgerichteten Schnitt durchgehend nach innen gewölbten Boden (7c) begrenzt ist.

## Beschreibung

Die Erfindung betrifft Fahrzeugreifen mit einem Laufstreifen mit zumindest einer schulterseitigen Profilblockreihe mit durchquerenden Querrillen mit einer maximalen Tiefe von 70% bis 100% der Profiltiefe und einer maximalen Breite von 5,0 mm bis 25,0 mm und mit durch die Querrillen voneinander getrennten Profilblöcken mit jeweils einem innerhalb der Bodenaufstandsfläche befindlichen, innenseitigen Blockabschnitt und einem außerhalb der Bodenaufstandsfläche befindlichen, schulterseitigen Blockabschnitt mit einer zwischen den Querrillen liegenden Schulterflanke,
wobei zu den Profilblöcken solche gehören, deren schulterseitiger Blockabschnitt mit einer von der Schulterflanke ausgehenden, an dieser Begrenzungskanten aufweisenden Vertiefung versehen ist,
wobei die Vertiefung eine in Umfangsrichtung zwischen den jeweiligen
Begrenzungskanten gemessene, erste maximale Länge von 7,00 mm bis 35,00 mm sowie, im in Draufsicht senkrecht zur Umfangsrichtung ausgerichteten Querschnitt betrachtet, eine entlang einer zwischen den jeweiligen Begrenzungskanten gerade verlaufenden Hilfslinie gemessene, zweite maximale Länge von 15,00 mm bis 35,00 mm aufweist und
   a. wobei die Vertiefung komplett von der Schulterflanke umlaufen ist oder
   b. wobei die Vertiefung derart U-förmig von der Schulterflanke umlaufen ist, dass
      die U-Schenkel der Schulterflanke zum innenseitigen Blockabschnitt weisen.

Ein derartiger Fahrzeugreifen ist beispielsweise aus der EP 2 905 148 A1 bekannt, wobei dieser Reifen als Vergleichsbeispiel angeführt ist. Dieser Fahrzeugreifen weist einen Laufstreifen mit einer schulterseitigen Profilblockreihe mit durchquerenden Querrillen und schulterseitigen Profilblöcken auf. Die schulterseitigen Blockabschnitte der schulterseitigen Profilblöcke sind jeweils mit einer von der Schulterflanke ausgehenden, von dieser umlaufenen, trapezförmigen Vertiefung versehen.

Aus der DE 10 2021 210 022 A1 und der DE 10 2018 220 707 A1 ist jeweils ein Fahrzeugreifen mit einem Laufstreifen mit einer schulterseitigen Profilrippe bekannt, welche mit laufstreifeninnenseitig innerhalb der schulterseitigen Profilrippe endenden Querrillen versehen sind, wobei im Bereich zwischen Querrillen im außerhalb der Bodenaufstandsfläche befindlichen, schulterseitigen Rippenabschnitt rechteckförmige Vertiefungen ausgebildet sind.

Bei Fahrzeugreifen der eingangs genannten Art sorgen die in den schulterseitigen Blockabschnitten ausgebildeten Vertiefungen beim Fahren auf weichen, insbesondere tiefen, Untergründen, wie Matsch, Schnee, Schneematsch und dergleichen, für eine Verbesserung der Traktionsperformance, wobei aktuell weiterhin Bestrebungen bestehen, die Reifen in dieser Hinsicht vor allem bei extremen Bedingungen, insbesondere beim Fahren auf unbefestigten Straßen bzw. im Gelände (Offroad), zu verbessern.

Der Erfindung liegt daher die Aufgabe zugrunde, bei einem Fahrzugreifen der eingangs genannten Art die Traktionsperformance auf weichen Untergründen, vor allem beim Fahren auf unbefestigten Straßen und im Gelände, zu verbessern.

Gelöst wird die gestellte Aufgabe erfindungsgemäß dadurch,
dass zu den Profilblöcken Profilblöcke gehören, deren schulterseitiger Blockabschnitt mit einer nutförmigen Einbuchtung versehen ist, wobei die nutförmige Einbuchtung an die Schulterflanke angrenzt, bis zu den Querrillen reicht, eine laufstreifeninnenseitige Begrenzungskante und eine laufstreifenaußenseitige Begrenzungskante aufweist und durch einen zu den Begrenzungskanten reichenden, im quer zur Umfangsrichtung ausgerichteten Schnitt durchgehend nach innen gewölbten Boden begrenzt ist, und
wobei zu Profilblöcken, deren schulterseitiger Blockabschnitt mit einer nutförmigen Einbuchtung versehen ist, solche zählen, welche durch eine Querrille von einem der Profilblöcke, deren schulterseitiger Blockabschnitt mit einer Vertiefung versehen ist, getrennt sind.

Die Griffkanten der nutförmigen Einbuchtungen greifen beim Fahren auf weichen Untergründen besonders wirkungsvoll in diese ein. Zusätzlich zeigen die nutförmigen Einbuchtungen einen "Fräseffekt", sodass diese den Auswurf von in den Profilnegativen, also insbesondere in den Querrillen und den Vertiefungen, aufgenommenem weichen, insbesondere matschartigen, Untergrundmaterial begünstigen, wodurch auch die jeweiligen Griffkanten der Vertiefungen effizienter als bisher in den Untergrund eingreifen. Durch dieses Zusammenwirken der nutförmigen Einbuchtungen und Vertiefungen ist die Traktionsperformance auf weichen Untergründen und somit vor allem beim Fahren auf unbefestigten Straßen und im Gelände weiter verbessert.

Gemäß einer bevorzugten Ausführung verlaufen die Schulterflanken, im in Draufsicht quer zur Umfangsrichtung verlaufenden Schnitt betrachtet, bezüglich einer parallel zur Reifenäquatorialebene verlaufenden Bezugslinie jeweils unter einem Winkel, wobei der Winkel der Schulterflanken der schulterseitigen Blockabschnitte mit je einer nutförmigen Einbuchtung vom Winkel der Schulterflanken der schulterseitigen Blockabschnitte mit je einer Vertiefung abweicht, insbesondere um 1,0° bis 5,0°, bevorzugt um bis zu 3,0°, abweicht. Die verschieden geneigten Schulterflanken tragen zu einer weiteren Verbesserung der Traktionsperformance bei.

Eine vorteilhafte Weiterentwicklung der letztgenannten Ausführung sieht vor, dass der Winkel der Schulterflanken der schulterseitigen Blockabschnitte mit je einer nutförmigen Einbuchtung größer oder kleiner ist als der Winkel der Schulterflanken der schulterseitigen Blockabschnitte mit je einer Vertiefung. Dies trägt zu einer weiteren Verbesserung der erwähnten synergistischen Wirkung zwischen den Vertiefungen und den nutförmigen Einbuchtungen bei und begünstigt gleichzeitig die Aufrechterhaltung der Reifengleichförmigkeit ("tire uniformity").

Gemäß einer weiteren vorteilhaften Weiterentwicklung der letztgenannten Ausführung verlaufen die Schulterflanken, im in Draufsicht quer zur Umfangsrichtung verlaufenden Schnitt betrachtet, derart, dass diese bei einer in Umfangsrichtung erfolgten Projektion in eine von der radialen Richtung und der Richtung quer zur Umfangsrichtung aufgespannten Fläche, einander genau einmal in einem Punkt kreuzen. Derart ausgebildete Schulterflanken zeigen eine besonders günstige synergistische Wirkung mit den nutförmigen Einbuchtungen, wobei sie vor allem eine zusätzliche Kontaktfläche beim Fahren auf weichen Untergründen zur Verfügung stellen und derart das Traktionsverhalten auf solchen weiter verbessern.

Gemäß einer weiteren bevorzugten Ausführung verlaufen die Schulterflanken, im in Draufsicht quer zur Umfangsrichtung verlaufenden Schnitt betrachtet, derart, dass diese bei einer in Umfangsrichtung erfolgten Projektion in eine von der radialen Richtung und der Richtung quer zur Umfangsrichtung aufgespannten Fläche, zueinander parallelversetzt sind.

Gemäß einer weiteren bevorzugten Ausführung verlaufen die Begrenzungskanten der nutförmigen Einbuchtung knickfrei.

Bei der letztgenannten bevorzugten Ausführung ist es von Vorteil, wenn die Begrenzungskanten der nutförmigen Einbuchtung, in Draufsicht betrachtet, parallel zueinander sowie insbesondere in Umfangsrichtung verlaufen. Dies verstärkt den erwähnten "Fräseffekt" der nutförmigen Einbuchtungen und verbessert folglich die Traktionsperformance auf weichen Untergründen weiter.

Ferner ist es bevorzugt, wenn die laufstreifeninnenseitige Begrenzungskante der nutförmigen Einbuchtung zum seitlichen Rand der Bodenaufstandsfläche einen quer zur Umfangsrichtung als kleinstmöglichen Abstand ermittelten Abstand von bis zu 2,00 mm aufweist. Eine solche Lage der nutförmigen Einbuchtung trägt zur weiteren Verbesserung ihrer erläuterten Wirkungsweise bei.

Der Boden der nutförmigen Einbuchtung verläuft, im quer zur Umfangsrichtung ausgerichteten Schnitt betrachtet, vorzugsweise entlang eines Kreisbogens. Dies trägt zu einer gleichmäßigen Lastverteilung im an die Einbuchtung angrenzenden Gummimaterial bei, sodass dieses gut vor Rissen geschützt ist und die Einbuchtungen somit besonders belast- und haltbar sind. Die vorteilhafte Wirkung der Einbuchtungen bleibt somit über den Laufstreifenabrieb erhalten.

Gemäß einer weiteren bevorzugten Ausführung ist vorgesehen, dass die nutförmigen Einbuchtung, im in Draufsicht quer zur Umfangsrichtung ausgerichteten Schnitt betrachtet, eine Breite aufweist, welche entlang einer zwischen der Begrenzungskanten gerade verlaufenden Hilfslinie ermittelt ist und 8,0 mm bis 14,0 mm, insbesondere 10,0 mm bis 12,0 mm, beträgt. Dies ist im Hinblick auf den erwähnten "Fräseffekt" von zusätzlichem Vorteil.

In diesem Zusammenhang ist es ferner vorteilhaft, wenn die nutförmige Einbuchtung, im in Draufsicht quer zur Umfangsrichtung ausgerichteten Schnitt betrachtet, eine maximale Tiefe aufweist, welche senkrecht zu einer zwischen der Begrenzungskanten gerade verlaufenden Hilfslinie ermittelt ist und 2,0 mm bis 5,0 mm, insbesondere 3,0 mm bis 4,0 mm, beträgt.

Bevorzugter Weise gehören zu den Profilblöcken ausschließlich die Profilblöcke, deren schulterseitiger Blockabschnitt mit je einer Vertiefung versehen ist, und die Profilblöcke, deren schulterseitiger Blockabschnitt mit je einer nutförmigen Einbuchtung versehen ist, wobei innerhalb der schulterseitigen Profilblockreihe insbesondere ein Profilblock, dessen schulterseitiger Blockabschnitt mit einer Vertiefung versehen ist, abwechselnd auf einen Profilblock, dessen schulterseitiger Blockabschnitt mit je einer nutförmigen Einbuchtung versehen ist, folgt. Dadurch ist der erwähnte synergistische Effekt weiter verstärkt, wodurch sich die Traktionsperformance auf einem besonders hohen Niveau befindet.

Gemäß einer weiteren bevorzugten Ausführung ist vorgesehen, dass
- die Vertiefung (11), im in Draufsicht senkrecht zur Umfangsrichtung ausgerichteten Querschnitt betrachtet, eine maximale Tiefe (tv) von 1,00 mm bis 4,00 mm, insbesondere von bis zu 3,00 mm, aufweist, wobei die maximale Tiefe (tv) senkrecht zur Hilfslinie (hv) ermittelt ist, und/oder
- wobei die erste maximale Länge (c_{V2}) der Vertiefung (11) 10,00 mm bis 30,00 mm, bevorzugt 15,00 mm bis 25,0 mm, beträgt und/oder
- wobei die zweite maximale Länge (c_{V1}) der Vertiefung (11) 20,00 mm bis 30,00 mm beträgt.

Solche Vertiefungen sind für Traktionsperformance auf weichen Untergründen besonders vorteilhaft.

Gemäß einer weiteren bevorzugten Ausführung weist der schulterseitige Blockabschnitt der Profilblöcke, deren schulterseitiger Blockabschnitt mit einer Vertiefung versehen ist, eine zwischen der Schulterflanke und der Außenfläche des innenseitigen Blockabschnitts ausgebildete Abschrägung auf, welche durch eine Schrägfläche gebildet ist, die, im im Draufsicht quer zur Umfangsrichtung ausgerichteten Schnitt betrachtet, gerade verläuft, eine Breite von 2,0 mm bis 5,0 mm, insbesondere von 2,5 mm bis 4,5 mm, aufweist und mit der Schulterflanke einen Winkel α von 145° bis 165°, insbesondere von 150° bis 160°, einschließt. Eine solche Abschrägung trägt - bei entsprechender sonstiger Ausgestaltung der schulterseitigen Profilblockreihe - insbesondere zur Aufrechterhaltung der Reifengleichförmigkeit ("tire uniformity") bei.

Gemäß einer weiteren bevorzugten Ausführung weist die Vertiefung einen Boden auf, welcher an keine der Begrenzungskanten der Vertiefung anschließt.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen in die Ebene abgewickelten schulterseitigen Umfangsabschnitt eines Laufstreifens eines Fahrzeugreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 3a einen Schnitt entlang der Linie IIIa-IIIa der Fig. 2, wobei der Laufstreifen entsprechend seiner Außenkontur gekrümmt ist,
Fig. 4 einen Schnitt entlang der Linie IV-IV der Fig. 2,
Fig. 4a einen Schnitt entlang der Linie IVa-IVa der Fig. 2, wobei der Laufstreifen entsprechend seiner Außenkontur gekrümmt ist,
Fig. 5 eine vergrößerte Schrägansicht gemäß der in Fig. 1 durch den Pfeil S₅ angedeuteten Sichtrichtung, wobei der Laufstreifen entsprechend seiner Außenkontur gekrümmt ist und
Fig. 6 übereinandergelegte Schulterflanken zweier Profilblöcke.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart. Die PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von insbesondere 71 bis 126 auf. Bevorzugt sind die Reifen für den Ganzjahreseinsatz vorgesehen.

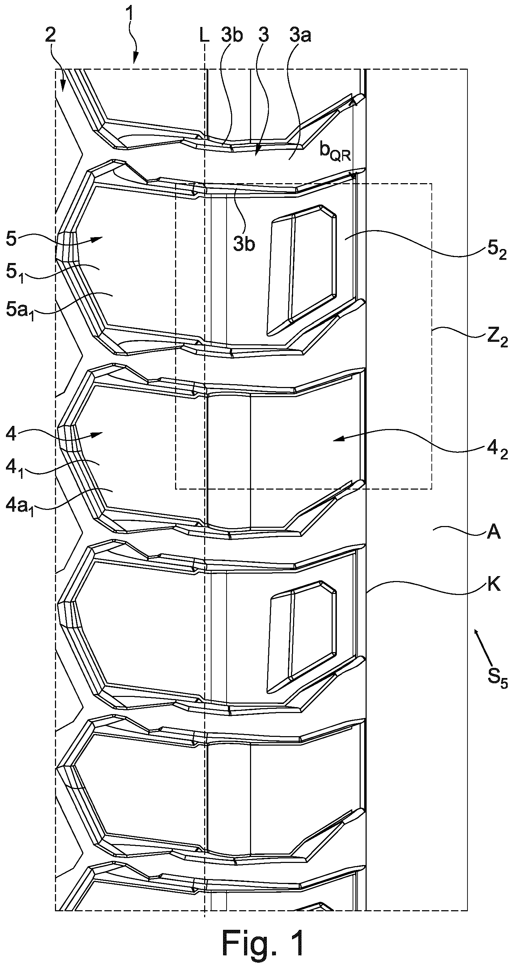

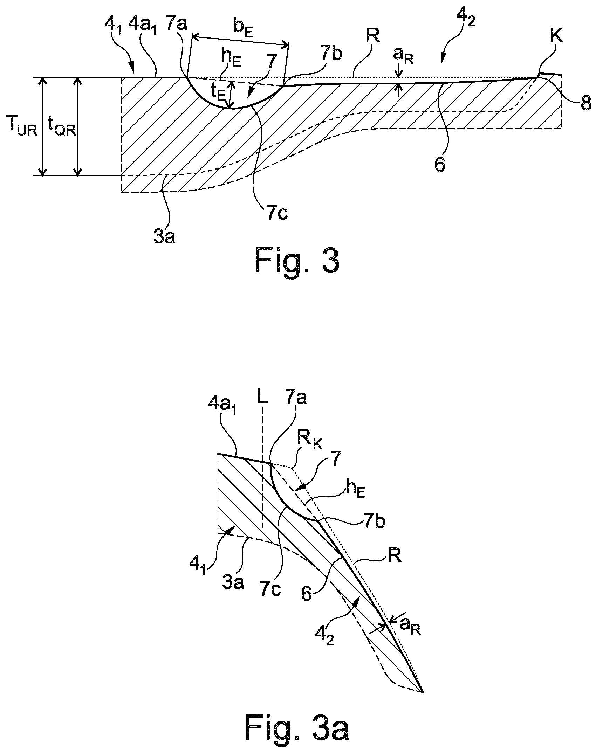

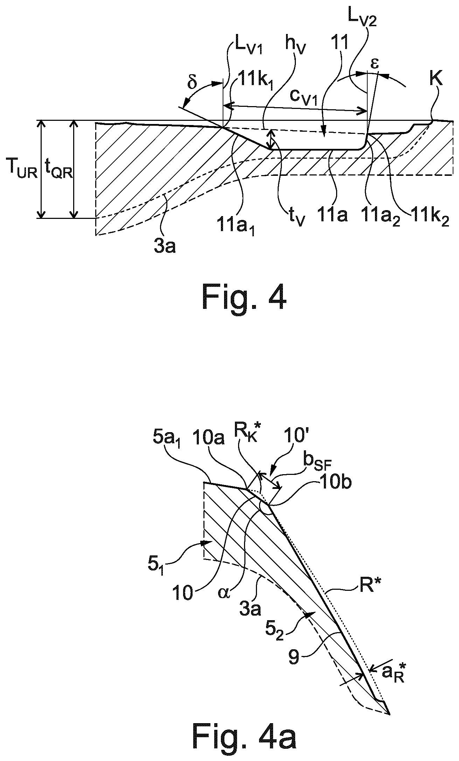

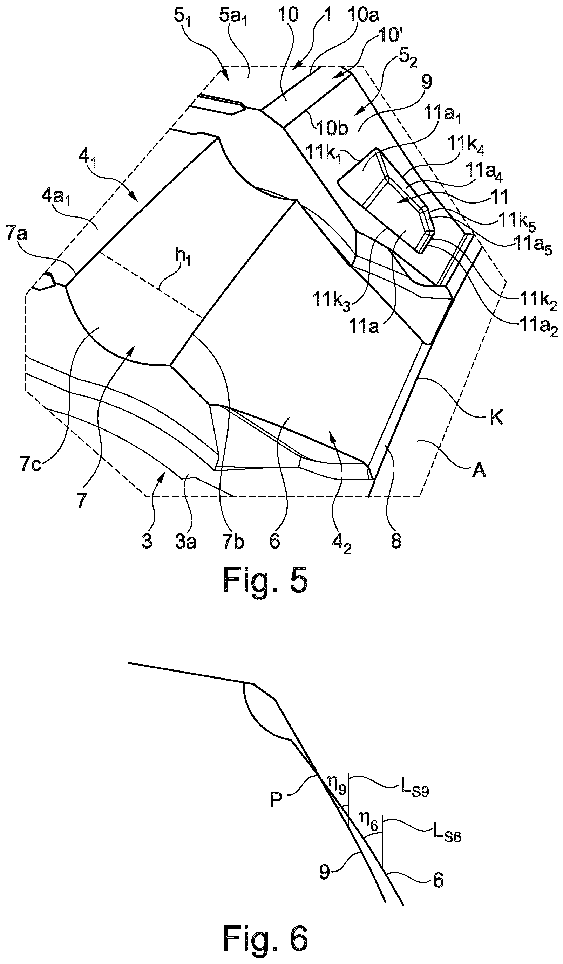

Fig. 1 zeigt einen Umfangsabschnitt einer schulterseitigen Profilblockreihe 1, welche laufstreifeninnenseitig durch eine in radialer Richtung auf die jeweils vorgesehene Profiltiefe T_{UR} (eingezeichnet in Fig. 3 und Fig. 4) von üblicherweise 6,5 mm bis 13,0 mm ausgeführte, beim Ausführungsbeispiel in Draufsicht zick-zack-förmig verlaufende, schulterseitige Umfangsrille 2 begrenzt ist und laufstreifenaußenseitig an einer in Umfangsrichtung umlaufenden Randkante K (vergl. Fig. 5) endet, an welcher die bei der Vulkanisation von der Seitenwandschale ausgeformte Außenfläche A (vergl. Fig. 5) anschließt. Bevorzugter Weise ist in der zweiten, nicht gezeigten Laufstreifenschulter eine zur schulterseitigen Profilblockreihe 1 analog ausgeführte sowie um 180° verdreht orientierte, weitere schulterseitige Profilblockreihe ausgebildet. Der im Bereich der schulterseitigen Profilblockreihe 1 verlaufende seitliche Rand der Bodenaufstandsfläche (ermittelt mit einem auf einer Normfelge montierten Reifen, Last bei 70% der maximalen Tragfähigkeit, Innendruck 85% des Normdrucks, gemäß ETRTO-Standards) ist durch eine gestrichelte Linie L gekennzeichnet.

Die schulterseitige Profilblockreihe 1 ist mit in die schulterseitige Umfangsrille 2 einmündenden, schulterseitigen Querrillen 3 versehen, welche an der Randkante K enden (vergl. Fig. 5), die schulterseitige Profilblockreihe 1 durchqueren und dieser schulterseitige Profilblöcke 4, 5 verleihen, wobei in Umfangsrichtung abwechselnd ein schulterseitiger Profilblock 4 auf einen schulterseitigen Profilblock 5 folgt.

Die schulterseitigen Querrillen 3 verlaufen, in Draufsicht betrachtet, insgesamt leicht bogenförmig sowie parallel zueinander sowie abschnittsweise innerhalb der Bodenaufstandsfläche und abschnittsweise außerhalb der Bodenaufstandsfläche, sind in radialer Richtung jeweils durch einen an der Randkante K endenden Rillengrund 3a (vergl. Fig. 3, Fig. 3a, Fig. 4, Fig. 4a: Tiefenverlauf des Rillengrunds 3a ist strichliert eingeblendet) und zwei an den jeweiligen schulterseitigen Profilblöcken 4, 5 ausgebildeten Rillenflanken 3b begrenzt, weisen jeweils eine in radialer Richtung ermittelte, maximale Tiefe t_{QR} (Tiefe an der tiefsten Stelle, Fig. 3, Fig. 4) von 70% bis 100%, insbesondere von zumindest 90%, beim Ausführungsbeispiel von 100%, der Profiltiefe T_{UR} (Fig. 3, Fig. 4) sowie eine am Niveau der Laufstreifenperipherie in Umfangsrichtung ermittelte, maximale Breite b_{QR} (Breite an der breitesten Stelle) von 5,0 mm bis 25,0 mm, insbesondere von 7,0 mm bis 20,0 mm, bevorzugt von bis zu 15,0 mm, besonders bevorzugt von bis zu 12,0 mm, auf.

Die schulterseitigen Profilblöcke 4, 5 weisen jeweils einen innerhalb der Bodenaufstandsfläche befindlichen, innenseitigen Blockabschnitt 4₁ (schulterseitiger Profilblock 4), 5₁ (schulterseitiger Profilblock 5) und einen an diesen angrenzenden, außerhalb der Bodenaufstandsfläche befindlichen, in Richtung zur von der Seitenwandschale ausgeformten Außenfläche A verlaufenden, schulterseitigen Blockabschnitt 4₂ (schulterseitiger Profilblock 4), 5₂ (schulterseitiger Profilblock 5) auf.

Der innenseitige Blockabschnitt 4₁, 5₁ ist in radialer Richtung durch eine in der Laufstreifenperipherie liegende Außenfläche 4a₁, 5a₁ begrenzt, welche geringfügig in den schulterseitigen Blockabschnitt 4₂, 5₂ hineinragt.

Nachfolgend wird zunächst auf die Ausgestaltung eines einzelnen schulterseitigen Blockabschnitts 4₂ und anschließend auf die Ausgestaltung eines einzelnen schulterseitigen Blockabschnitts 5₂ näher eingegangen.

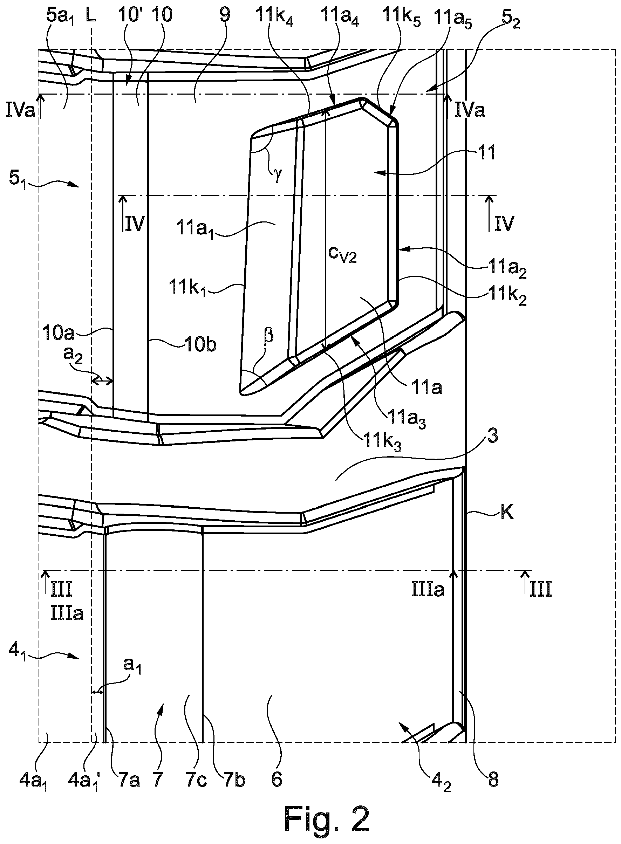

Gemäß Fig. 2, Fig. 3, Fig. 3a und Fig. 5 weist der schulterseitige Blockabschnitt 4₂ eine bis zu den schulterseitigen Querrillen 3 (Fig. 2, Fig. 5) reichende, durchgehend nach außen leicht gekrümmte Schulterflanke 6 auf, wobei der schulterseitige Blockabschnitt 4₂ von einer zwischen der Schulterflanke 6 und der Außenfläche 4a₁ des innenseitigen Blockabschnitts 4₁ ausgebildeten, bis zu den jeweils angrenzenden Querrillen 3 (Fig. 2, Fig. 5) reichenden, nutförmigen Einbuchtung 7 durchquert ist. Zwischen der Schulterflanke 6 und der Randkante k ist eine nach innen eingebuchtete, einen vorspringenden Absatz erzeugende Übergangsrundung 8 (Fig. 2, Fig. 3, Fig. 5) mit einem Radius von bis zu 0,50 mm ausgebildet. Die Schulterflanke 6 verläuft, im in Draufsicht quer zur Umfangsrichtung ausgerichteten Schnitt betrachtet, knickfrei sowie durchgehend nach außen gewölbt (Fig. 3a, vergl. Lage der Linie IIIa-IIIa in Fig. 2).

Die Einbuchtung 7 verläuft, in Draufsicht betrachtet, gerade sowie in Umfangsrichtung (Fig. 2), weist eine entlang der Außenfläche 4a₁ ausgebildete, in Umfangsrichtung verlaufende, knickfreie, laufstreifeninnenseitige Begrenzungskante 7a (Fig. 2, Fig. 5) und eine entlang der Schulterflanke 6 ausgebildete, in Umfangsrichtung verlaufende, knickfrei, laufstreifenaußenseitige Begrenzungskante 7b auf und ist durch eine zwischen der laufstreifeninnenseitigen Begrenzungskante 7a und der laufstreifenaußenseitigen Begrenzungskante 7b verlaufenden Boden 7c begrenzt. Die laufstreifeninnenseitige Begrenzungskante 7a weist zum seitlichen Rand der Bodenaufstandsfläche (Linie L) einen quer zu Umfangsrichtung ermittelten Abstand a₁ (Fig. 2) von bis zu 2,00 mm auf. Gemäß Fig. 3 und Fig. 3a verläuft der Boden 7c, im in Draufsicht quer zur Umfangsrichtung ausgerichteten Schnitt betrachtet, durchgehend nach innen gewölbt, daher knickfrei sowie derart, dass eine zwischen den Enden des Bodens 7c, also zwischen der Begrenzungskanten 7a, 7b, gerade verlaufende Hilfslinie h_{E} komplett außerhalb des jeweiligen Gummimaterials liegt, wobei der Boden 7c insbesondere entlang eines Kreisbogens verläuft. Die Einbuchtung 7 weist, im zuletzt erwähnten Schnitt betrachtet, eine entlang der Hilfslinie h_{E} ermittelte Breite b_{E} (Fig. 3) von 8,0 mm bis 14,0 mm, insbesondere von 10,0 mm bis 12,0 mm, sowie eine senkrecht zur Hilfslinie h_{E} ermittelte, maximale Tiefe t_{E} (Fig. 3, Tiefe an der tiefsten Stelle) von 2,0 mm bis 5,0 mm, insbesondere von 3,0 mm bis 4,0 mm, auf.

In Fig. 3 ist ferner eine Referenzaußenkonturlinie R punktiert eingezeichnet, welche, im in Draufsicht quer zur Umfangsrichtung verlaufenden Querschnitt sowie bei in die Ebene abwickelten Laufstreifen betrachtet, gerade zwischen dem zur Seitenwand nächstliegenden Ende der Schulterflanke 6 und der laufstreifeninnenseitigen Begrenzungskante 7a verläuft. Wie Fig. 3a zeigt, weist die Referenzaußenkonturlinie R unter Berücksichtigung der Reifenkrümmung einen Knickpunk R_{K} auf, welcher sich durch Fortführung der Außenfläche 4a₁ über die Einbuchtung 7 hinaus ergibt. Die Schulterflanke 6 verläuft, im in Draufsicht quer zur Umfangsrichtung verlaufenden Querschnitt betrachtet, derart, dass ein zwischen der Schulterflanke 6 und der Referenzaußenkonturlinie R als kleinstmögliche Abstand ermittelter Abstand a_{R} (Fig. 3, Fig. 3a) über die Erstreckung der Schulterflanke 6 vom Ende der Schulterflanke 6, welches sich am nächsten zur Seitenwand befindet, zum anderen Ende der Schulterflanke 6, also zur laufstreifenaußenseitigen Begrenzungskante 7b der Einbuchtung 7, fortlaufend zunimmt.

Gemäß Fig. 2, Fig. 4a und Fig. 5 weist der schulterseitige Blockabschnitt 5₂ eine bis zu den schulterseitigen Querrillen 3 (Fig. 2, Fig. 5) reichende, durchgehend leicht nach außen gekrümmte Schulterflanke 9 und eine zwischen dieser und der Außenfläche 5a₁ des innenseitigen Blockabschnitts 5₁ ausgebildete, bis zu den jeweils angrenzenden Querrillen 3 (Fig. 2, Fig. 5) reichende Abschrägung 10', welche durch eine Schrägfläche 10 gebildet ist, auf. Die Schulterflanke 9 verläuft, im in Draufsicht quer zur Umfangsrichtung ausgerichteten Schnitt betrachtet, knickfrei sowie durchgehend nach außen gewölbt (Fig. 4a, vergl. Lage der Linie IVa-IVa in Fig. 2). Die Schrägfläche 10 weist eine entlang der Außenfläche 5a₁ ausgebildete, in Umfangsrichtung verlaufende, knickfreie, laufstreifeninnenseitige Begrenzungskante 10a und eine entlang der Schulterflanke 9 ausgebildete, in Umfangsrichtung verlaufende, knickfreie, laufstreifenaußenseitige Begrenzungskante 10b auf. Die radial äußere Begrenzungskante 10a weist zum seitlichen Rand der Bodenaufstandsfläche (Linie L) einen quer zu Umfangsrichtung ermittelten Abstand a₂ (Fig. 2) von bis zu 4,00 mm auf. Gemäß Fig. 4a verläuft die Schrägfläche 10, im in Draufsicht quer zur Umfangsrichtung ausgerichteten Schnitt betrachtet, gerade und weist, im zuletzt erwähnten Schnitt betrachtet, eine Breite b_{SF} von 2,0 mm bis 5,0 mm, insbesondere von 2,5 mm bis 4,5 mm, auf und schließt mit der Schulterflanke 9 einen Winkel α von 145° bis 165°, insbesondere von 150° bis 160°, ein, wobei sich der Winkel α - bedingt durch den gekrümmten Verlauf der Schulterflanke 9 - auf eine durch die laufstreifenaußenseitige Begrenzungskante 10b verlaufenden, an die Schulterflanke 9 angelegte Tangente bezieht (nicht eingezeichnet).

In Fig. 4a ist ferner eine in Umfangsrichtung erfolgte Projektion R* der bereits erwähnten Referenzaußenkonturlinie R (Fig. 3, Fig. 3a) punktiert eingezeichnet. Wie Fig. 4a zeigt, weist die Projektion R* der Referenzaußenkonturlinie R unter Berücksichtigung der Reifenkrümmung einen Knickpunk R_{K}* auf, welcher sich durch Fortführung der Außenfläche 5a₁ über die Abschrägung 10' hinaus ergibt. Die Schulterflanke 9 verläuft, im in Draufsicht quer zur Umfangsrichtung verlaufenden Querschnitt betrachtet, derart, dass ein zwischen der Schulterflanke 9 und der Referenzaußenkonturlinie R* als kleinstmögliche Abstand ermittelter Abstand a_{R}* über die Erstreckung der Schulterflanke 9 vom Ende der Schulterflanke 9, welches sich am nächsten zur Seitenwand befindet, zum anderen Ende der Schulterflanke 9, also zur laufstreifenaußenseitigen Begrenzungskante 10b der Schrägfläche 10, fortlaufend abnimmt.

Entsprechend der unter Zuhilfenahme der Referenzaußenkonturlinie R und deren Projektion R* erläuterten Ausgestaltung der Schulterflanke 6 und der Schulterflanke 9 verlaufen die Schulterflanken 6, 9 gemäß Fig. 6a, im in Draufsicht quer zur Umfangsrichtung verlaufenden Schnitt betrachtet, derart, dass diese bei einer in Umfangsrichtung erfolgten Projektion in eine gemeinsame, von der radialen Richtung und der Richtung quer zur Umfangsrichtung aufgespannten Fläche einander genau einmal an einem Punkt P kreuzen, also genau einmal am Punkt P schneiden, wobei jede Schulterflanke 6, 9 bezüglich einer parallel zur Reifenäquatorialebene verlaufenden Bezugslinie L_{S6} (Schulterflanke 6), L_{S9} (Schulterflanke 9) unter einem Winkel η₆ (Schulterflanke 6), η₉ (Schulterflanke 9) verläuft und der Winkel η₆ größer ist als der Winkel η₉. Bedingt durch die Krümmung der Schulterflanken 6, 9 ist der Winkel η₆, η₉ jeweils bezüglich einer die Bezugslinie L_{S6}, L_{S9} am Niveau der Schulterflanke 6, 9 schneidenden, an die Schulterflanke 6, 9 angelegten Tangente ermittelt.

Gemäß Fig. 2 und Fig. 5 ist in jedem schulterseitigen Blockabschnitt 5₂ eine komplett innerhalb des schulterseitigen Blockabschnitts 5₂ liegende, daher von der Schulterflanke 9 komplett umlaufene Vertiefung 11 ausgebildet, welche, in Draufsicht auf die Schulterflanke 9 betrachtet, die Form eines in Umfangsrichtung langgestreckten Parallelogramms mit einer der Seitenwand zugewandten abgeschrägten Ecke aufweist, durch welche der eine spitzwinkelige Eckbereich des Parallelogramms ausgespart ist. Die Vertiefung 11 befindet sich - bezogen auf die Umfangsrichtung - im Wesentlichen mittig zwischen den jeweiligen Querrillen 3 und weist - jeweils am Niveau der Schulterflanke 9 - im Wesentlichen in Umfangsrichtung verlaufende, die einen einander gegenüberliegenden Parallelogrammseiten bildende, erste Begrenzungskanten 11k₁, 11k₂, die anderen einander gegenüberliegenden Parallelogrammseiten bildende, quer zur Umfangsrichtung schräggestellte, zweite Begrenzungskanten 11k₃, 11k₄ und eine an der abgeschrägten Ecke verlaufende, dritte Begrenzungskante 11k₅ auf. Die Begrenzungskanten 11k₁, 11k₂ 11k₃, 11k₄, 11k₅ verlaufen, unter Vernachlässigung der Reifenkrümmung, jeweils gerade. Die Begrenzungskante 11k₁ befindet sich näher zum seitlichen Rand der Bodenaufstandsfläche (Linie L) als die Begrenzungskante 11k₂ und ist in Folge der erwähnten Abschrägung länger ausgeführt als die Begrenzungskante 11k₂, wobei die Begrenzungskanten 11k₁, 11k₂ unabhängig voneinander jeweils in Umfangsrichtung oder zu dieser unter einem Winkel von bis zu 15°, insbesondere von 5° bis 10°, verlaufen. Die Begrenzungskante 11k₃ schließt mit der Begrenzungskante 11k₁ einen spitzen Winkel β (Fig. 2) ein und die Begrenzungskante 11k₄ schließt mit der Begrenzungskante 11k₁ einen stumpfen Winkel γ (Fig. 2) ein, sodass die Begrenzungskante 11k₄ folglich zur Begrenzungskante 11k₅ verläuft und aufgrund der abgeschrägten Ecke kürzer ausgeführt ist als die Begrenzungskante 11k₃. Die Vertiefung 11 ist derart ausgeführt, dass diese, bei Sicht auf die Schulterflanke 9 betrachtet, in ein im Hinblick auf seinen Flächeninhalt kleinstmögliches Parallelogramm einschreibbar ist, wobei die Vertiefung 11 zumindest 90% des Flächeninhalts dieses Parallelogramms einnimmt.

Die Vertiefung 11 ist durch einen an keine der Begrenzungskanten 11k₁, 11k₂ 11k₃, 11k₄, 11k₅ anschließenden Boden 11a, in Umfangsrichtung durch zwei an die Begrenzungskanten 11k₃, 11k₄ anschließende Seitenflächen 11a₃, 11a₄ (Seitenfläche 11a₃ in Fig. 5 verdeckt), an die Begrenzungskanten 11k₁, 11k₂ anschließende Endflanken 11a₁, 11a₂ und eine an die Begrenzungskante 11k₅ anschließende Eckfläche 11a₅ begrenzt. Gemäß Fig. 4 verläuft der Boden 11a, im in Draufsicht senkrecht zur Umfangsrichtung ausgerichteten Querschnitt betrachtet, gerade. Die Endflanke 11a₁ verläuft, im zuletzt erwähnten Querschnitt betrachtet, relativ zu einer senkrecht zum Boden 11a ausgerichteten Bezugslinie L_{V1} unter einem Winkel δ von 60° bis 70°. Die Endflanke 11a₂ verläuft, im zuletzt erwähnten Querschnitt betrachtet, relativ zu einer senkrecht zum Boden 11a ausgerichteten Bezugslinie L_{V2} unter einem Winkel ε von 8° bis 12°. Die Vertiefung 11 weist, im zuletzt erwähnten Querschnitt betrachtet, eine entlang einer zwischen den ersten Begrenzungskanten 11k₁, 11k₂ gerade verlaufenden Hilfslinie hv gemessene, maximale Länge c_{V1} (Länge an der längsten Stelle zwischen den ersten Begrenzungskanten 11k₁, 11k₂) von 15,00 mm bis 35,00 mm, insbesondere von 20,00 mm bis 30,00 mm, eine senkrecht zur Hilfslinie hv ermittelte, maximale Tiefe tv (Tiefe an der tiefsten Stelle) von 1,00 mm bis 4,00 mm, insbesondere von bis zu 3,00, welche am gegenseitigen Anschlussbereich des Bodens 11a an die Endflanke 11a₁ vorliegt, sowie eine Umfangsrichtung zwischen den zweiten Begrenzungskanten 11k₃, 11k₄ gemessene, maximale Länge c_{V2} (Fig. 2, Länge an der längsten Stelle zwischen den zweiten Begrenzungskanten 11k₃, 11k₄) von 7,00 mm bis 35,00 mm, insbesondere von 10,00 mm bis 30,00 mm, bevorzugt von 15,00 mm bis 25,0mm, auf.

Die Erfindung ist auf das beschriebene Ausführungsbeispiel nicht beschränkt.

Es ist zumindest eine schulterseitige Profilblockreihe mit entsprechend ausgeführten Profilblöcken vorgesehen.

Die Schulterflanken 6, 9 können eine von der beschriebenen Neigung abweichende Neigung aufweisen. Die diesbezüglichen möglichen Ausgestaltungen werden nachfolgend erläutert. Gemäß einer ersten Ausgestaltung weisen die Schulterflanken 6, 9 übereinstimmende Winkel η₆, η₉ auf, wobei die Schulterflanken 6, 9, im in Draufsicht quer zur Umfangsrichtung verlaufenden Schnitt betrachtet, derart verlaufen, dass diese bei einer in Umfangsrichtung erfolgten Projektion in eine gemeinsame, von der radialen Richtung und der Richtung quer zur Umfangsrichtung aufgespannten Fläche zueinander vorzugsweise parallel versetzt sind. Gemäß einer zweiten Ausgestaltung ist der Winkel η₆ größer als der Winkel η₉, wie im Zusammenhang mit den Ausführungsbeispiel beschrieben. Gemäß einer dritten Ausgestaltung ist der Winkel η₆ kleiner als der Winkel η₉. Die Differenz zwischen dem Winkel η₆ und dem Winkel η₉ beträgt insbesondere 1,0° bis 5,0°, bevorzugt bis zu 3,0°. Weicht der Winkel η₆ vom Winkel η₉ ab, ist es bevorzugt, wenn sich die Schulterflanken 6, 9, in der erwähnten Projektion betrachtet, einander einmal an einem Punkt P kreuzen oder am an der Seitenwand zugewandten Ende zusammenlaufen. Alternativ verlaufen die Schulterflanken 6, 9 bei voneinander abweichenden Winkel η₆, η₉ derart, dass sie sich, in der erwähnten Projektion betrachtet, nicht kreuzen und nicht zusammenlaufen.

Die Profilblockreihe weist erste Profilblöcke, deren schulterseitiger Blockabschnitt jeweils mit einer Einbuchtung 7 versehen ist, und zweite Profilblöcke, deren schulterseitiger Blockabschnitt jeweils mit einer Vertiefung 11 versehen ist, auf. Dabei sind erste Profilblöcke vorgesehen, welche durch eine Querrille 3 von einem zweiten Profilblock getrennt sind. Die Vertiefung 11 muss von der Schulterflanke 9 nicht komplett umlaufen sein, sondern kann von dieser alternativ derart U-förmig umlaufen bzw. umgeben sein, dass die Schulterflanke 9 zwei zum innenseitigen Blockabschnitt 5₁ weisende, an den verschiedenen in Umfangsrichtung einander gegenüberliegenden Seiten der Vertiefung 11 liegende U-Schenkel und einen zwischen den U-Schenkel verlaufenden, zwischen der Vertiefung 11 und der Seitenwand liegenden, in Umfangsrichtung ausgerichteten "U-Bogen" aufweist. Der U-Bogen befindet sich somit zwischen der von der Seitenwandschale ausgeformten Außenfläche A und der Vertiefung 11. Die Abschrägungen 10' sind optional, sodass die Schulterflanke 9 entweder über eine scharfe Kante oder tangential (knickfrei) über eine zur Außenfläche 5a₁ gehörende Übergangsrundung an die Außenfläche 5a₁ anschließen kann. Ist eine solche Übergangsrundung vorgesehen, reicht die Schulterflanke 9 bis zum seitlichen Rand der Bodenaufstandsfläche (Linie L), sodass die "Teilung" in die Außenfläche 5a₁ und die Schulterflanke 9 am seitlichen Rand der Bodenaufstandsfläche erfolgt.

### Bezugszeichenliste

- 1: schulterseitige Profilblockreihe
- 2: schulterseitige Umfangsrille
- 3: schulterseitige Querrille
- 3a: Rillengrund
- 3b: Rillenflanke
- 4: schulterseitiger Profilblock
- 4₁: innenseitiger Blockabschnitt
- 4a₁: Außenfläche
- 4₂: schulterseitiger Blockabschnitt
- 5: schulterseitiger Profilblock
- 5₁: innenseitiger Blockabschnitt
- 5a₁: Außenfläche
- 5₂: schulterseitiger Blockabschnitt
- 6: Schulterflanke
- 7: nutförmige Einbuchtung
- 7a: laufstreifeninnenseitige Begrenzungskante
- 7b: laufstreifenaußenseitige Begrenzungskante
- 7c: Boden
- 8: Übergangsrundung
- 9: Schulterflanke
- 10: Schrägfläche
- 10': Abschrägung
- 10a: laufstreifeninnenseitige Begrenzungskante
- 10b: laufstreifenaußenseitige Begrenzungskante
- 11: Vertiefung
- 11a: Boden
- 11a₁, 11a₂: Endflanke
- 11a₃, 11a₄: Seitenfläche
- 11a₅: Eckfläche
- 11k₁, 11k₂: erste Begrenzungskante
- 11k₃, 11k₄: zweite Begrenzungskante
- 11k₅: dritte Begrenzungskante
- A: Außenfläche
- a₁, a₂, a_{R}, a_{R}*: Abstand
- b_{E}, b_{SF}: Breite
- b_{QR}: maximale Breite
- c_{V1}, c_{V2}: maximale Länge
- h_{E}, h_{V}: Hilfslinie
- K: Randkante
- L: gestrichelte Linie (seitlicher Rand der Bodenaufstandsfläche)
- L_{S6}, L_{S9}, L_{V1}, L_{V2}: Bezugslinie
- P: Punkt
- R: Referenzaußenkonturlinie
- R*: Projektion
- R_{K}, R_{K}*: Knickpunkt
- S₅: Pfeil (Sichtrichtung)
- t_{E}, t_{QR}, t_{V}: maximale Tiefe
- T_{UR}: Profiltiefe
- Z₂: Detail
- α, β, γ, δ, ε, η₆, n₉: Winkel

## Patentansprüche

1. Fahrzeugreifen mit einem Laufstreifen mit zumindest einer schulterseitigen Profilblockreihe (1) mit durchquerenden Querrillen (3) mit einer maximalen Tiefe (t_{QR}) von 70% bis 100% der Profiltiefe (T_{UR}) und einer maximalen Breite (b_{QR}) von 5,0 mm bis 25,0 mm und mit durch die Querrillen (3) voneinander getrennten Profilblöcken (4, 5) mit jeweils einem innerhalb der Bodenaufstandsfläche befindlichen, innenseitigen Blockabschnitt (4₁, 5₁) und einem außerhalb der Bodenaufstandsfläche befindlichen, schulterseitigen Blockabschnitt (4₂, 5₂) mit einer zwischen den Querrillen (3) liegenden Schulterflanke (6, 9),
wobei zu den Profilblöcken (4, 5) solche gehören, deren schulterseitiger Blockabschnitt (5₂) mit einer von der Schulterflanke (9) ausgehenden, an dieser Begrenzungskanten (11k₁, 11k₂, 11k₃, 11k₄, 11k₅) aufweisenden Vertiefung (11) versehen ist,
wobei die Vertiefung (11) eine in Umfangsrichtung zwischen den jeweiligen Begrenzungskanten (11k₃, 11k₄) gemessene, erste maximale Länge (c_{V2}) von 7,00 mm bis 35,00 mm sowie, im in Draufsicht senkrecht zur Umfangsrichtung ausgerichteten Querschnitt betrachtet, eine entlang einer zwischen den jeweiligen Begrenzungskanten (11k₁, 11k₂) gerade verlaufenden Hilfslinie (hv) gemessene, zweite maximale Länge (c_{V1}) von 15,00 mm bis 35,00 mm aufweist und
a. wobei die Vertiefung (11) komplett von der Schulterflanke (9) umlaufen ist oder
b. wobei die Vertiefung (11) derart U-förmig von der Schulterflanke (9) umlaufen ist, dass die U-Schenkel der Schulterflanke (9) zum innenseitigen Blockabschnitt (4₁, 5₁) weisen,
**dadurch gekennzeichnet,**
**dass** zu den Profilblöcken (4, 5) Profilblöcke (4) gehören, deren schulterseitiger Blockabschnitt (4₂) mit einer nutförmigen Einbuchtung (7) versehen ist, wobei die nutförmige Einbuchtung (7) an die Schulterflanke (6) angrenzt, bis zu den Querrillen (3) reicht, eine laufstreifeninnenseitige Begrenzungskante (7a) und eine laufstreifenaußenseitige Begrenzungskante (7b) aufweist und durch einen zu den Begrenzungskanten (7a, 7b) reichenden, im quer zur Umfangsrichtung ausgerichteten Schnitt durchgehend nach innen gewölbten Boden (7c) begrenzt ist, und
wobei zu Profilblöcken (4), deren schulterseitiger Blockabschnitt (4₂) mit einer nutförmigen Einbuchtung (7) versehen ist, solche zählen, welche durch eine Querrille (3) von einem der Profilblöcke (5), deren schulterseitiger Blockabschnitt (5₂) mit einer Vertiefung (11) versehen ist, getrennt sind.

2. Fahrzeugreifen nach Anspruch 1, **dadurch gekennzeichnet, dass** die Schulterflanken (6, 9), im in Draufsicht quer zur Umfangsrichtung verlaufenden Schnitt betrachtet, bezüglich einer parallel zur Reifenäquatorialebene verlaufenden Bezugslinie (L_{S6}, L_{S9}) jeweils unter einem Winkel (η₆, η₉) verlaufen, wobei der Winkel (η₆) der Schulterflanken (6) der schulterseitigen Blockabschnitte (4₂) mit je einer nutförmigen Einbuchtung (7) vom Winkel (η₉) der Schulterflanken (9) der schulterseitigen Blockabschnitte (5₂) mit je einer Vertiefung (11) abweicht, insbesondere um 1,0° bis 5,0°, bevorzugt um bis zu 3,0°, abweicht.

3. Fahrzeugreifen nach Anspruch 2, **dadurch gekennzeichnet, dass** der Winkel (η₆) der Schulterflanken (6) der schulterseitigen Blockabschnitte (4₂) mit je einer nutförmigen Einbuchtung (7) größer oder kleiner ist als der Winkel (η₉) der Schulterflanken (9) der schulterseitigen Blockabschnitte (5₂) mit je einer Vertiefung (11).

4. Fahrzeugreifen nach Anspruch 2 oder 3, **dadurch gekennzeichnet, dass** die Schulterflanken (6, 9), im in Draufsicht quer zur Umfangsrichtung verlaufenden Schnitt betrachtet, derart verlaufen, dass diese bei einer in Umfangsrichtung erfolgten Projektion in eine von der radialen Richtung und der Richtung quer zur Umfangsrichtung aufgespannten Fläche, einander genau einmal in einem Punkt (P) kreuzen.

5. Fahrzeugreifen nach Anspruch 1, **dadurch gekennzeichnet, dass** die Schulterflanken (6, 9), im in Draufsicht quer zur Umfangsrichtung verlaufenden Schnitt betrachtet, derart verlaufen, dass diese bei einer in Umfangsrichtung erfolgten Projektion in eine von der radialen Richtung und der Richtung quer zur Umfangsrichtung aufgespannten Fläche, zueinander parallelversetzt sind.

6. Fahrzeugreifen nach einem der Ansprüche 1 bis 5, **dadurch gekennzeichnet, dass** die Begrenzungskanten (7a, 7b) der nutförmigen Einbuchtung (7) knickfrei verlaufen.

7. Fahrzeugreifen nach Anspruch 6, **dadurch gekennzeichnet, dass** die Begrenzungskanten (7a, 7b) der nutförmigen Einbuchtung (7), in Draufsicht betrachtet, parallel zueinander sowie insbesondere in Umfangsrichtung verlaufen.

8. Fahrzeugreifen nach einem der Ansprüche 1 bis 7, **dadurch gekennzeichnet, dass** die laufstreifeninnenseitige Begrenzungskante (7a) der nutförmigen Einbuchtung (7) zum seitlichen Rand der Bodenaufstandsfläche (Linie L) einen quer zur Umfangsrichtung als kleinstmöglichen Abstand ermittelten Abstand (a₁) von bis zu 2,00 mm aufweist.

9. Fahrzeugreifen nach einem der Ansprüche 1 bis 8, **dadurch gekennzeichnet, dass** der Boden (7c) der nutförmigen Einbuchtung (7), im quer zur Umfangsrichtung ausgerichteten Schnitt betrachtet, entlang eines Kreisbogens verläuft.

10. Fahrzugreifen nach einem der Ansprüche 1 bis 9, **dadurch gekennzeichnet, dass** die nutförmige Einbuchtung (7), im in Draufsicht quer zur Umfangsrichtung ausgerichteten Schnitt betrachtet, eine Breite (b_{E}) aufweist, welche entlang einer zwischen der Begrenzungskanten (7a, 7b) gerade verlaufenden Hilfslinie (h_{E}) ermittelt ist und 8,0 mm bis 14,0 mm, insbesondere 10,0 mm bis 12,0 mm, beträgt.

11. Fahrzugreifen nach einem der Ansprüche 1 bis 10, **dadurch gekennzeichnet, dass** die nutförmige Einbuchtung (7), im in Draufsicht quer zur Umfangsrichtung ausgerichteten Schnitt betrachtet, eine maximale Tiefe (t_{E}) aufweist, welche senkrecht zu einer zwischen der Begrenzungskanten (7a, 7b) gerade verlaufenden Hilfslinie (h_{E}) ermittelt ist und 2,0 mm bis 5,0 mm, insbesondere 3,0 mm bis 4,0 mm, beträgt.

12. Fahrzeugreifen nach einem der Ansprüche 1 bis 11, **dadurch gekennzeichnet, dass** zu den Profilblöcken (4, 5) ausschließlich die Profilblöcke (5), deren schulterseitiger Blockabschnitt (5₂) mit je einer Vertiefung (11) versehen ist, und die Profilblöcke (4), deren schulterseitiger Blockabschnitt (4₂) mit je einer nutförmigen Einbuchtung (7) versehen ist, gehören, wobei innerhalb der schulterseitigen Profilblockreihe (1) insbesondere ein Profilblock (5), dessen schulterseitiger Blockabschnitt (5₂) mit einer Vertiefung (11) versehen ist, abwechselnd auf einen Profilblock (4), dessen schulterseitiger Blockabschnitt (4₂) mit je einer nutförmigen Einbuchtung (7) versehen ist, folgt.

13. Fahrzeugreifen nach einem der Ansprüche 1 bis 12, **dadurch gekennzeichnet, dass**
- die Vertiefung (11), im in Draufsicht senkrecht zur Umfangsrichtung ausgerichteten Querschnitt betrachtet, eine maximale Tiefe (tv) von 1,00 mm bis 4,00 mm, insbesondere von bis zu 3,00 mm, aufweist, wobei die maximale Tiefe (tv) senkrecht zur Hilfslinie (hv) ermittelt ist, und/oder
- wobei die erste maximale Länge (c_{V2}) der Vertiefung (11) 10,00 mm bis 30,00 mm, bevorzugt 15,00 mm bis 25,0 mm, beträgt und/oder
- wobei die zweite maximale Länge (c_{V1}) der Vertiefung (11) 20,00 mm bis 30,00 mm beträgt.

14. Fahrzeugreifen nach einem der Ansprüche 1 bis 13, **dadurch gekennzeichnet, dass** der schulterseitige Blockabschnitt (5₂) der Profilblöcke (5), deren schulterseitiger Blockabschnitt (5₂) mit einer Vertiefung (11) versehen ist, eine zwischen der Schulterflanke (9) und der Außenfläche (5a₁) des innenseitigen Blockabschnitts (5₁) ausgebildete Abschrägung (10') aufweist, welche durch eine Schrägfläche (10) gebildet ist, die, im im Draufsicht quer zur Umfangsrichtung ausgerichteten Schnitt betrachtet, gerade verläuft, eine Breite (b_{SF}) von 2,0 mm bis 5,0 mm, insbesondere von 2,5 mm bis 4,5 mm, aufweist und mit der Schulterflanke (9) einen Winkel α von 145° bis 165°, insbesondere von 150° bis 160°, einschließt.

15. Fahrzeugreifen nach einem der Ansprüche 1 bis 14, **dadurch gekennzeichnet, dass** die Vertiefung (11) einen Boden (11a) aufweist, welcher an keine der Begrenzungskanten (11k₁, 11k₂, 11k₃, 11k₄, 11k₅) der Vertiefung (11) anschließt.
